# EUROPEAN PATENT APPLICATION

(11) **EP 4 306 985 A1**
(43) Date of publication of application: **17.01.2024**
(21) Application number: 22184622.3
(22) Date of filing: 13.07.2022
(51) Int. Cl.: G01S 5/02, G01S 1/68

(54) **MACHINE LEARNING FINGERPRINT-BASED INDOOR LOCALIZATION**

(71) Applicant: Siemens Aktiengesellschaft, 80333 München (DE)
(72) Inventor: Martinez Alba, Alberto, 80935 München (DE); Michailow, Nicola, 81825 München (DE)
(74) Representative: Siemens Patent Attorneys

(57) **Abstract**

The disclosed embodiments relate to a fingerprinting-based localization with improved accuracy. Improving a spatial accuracy is accomplished by leveraging the use of machine-learning techniques for processing wireless channel condition values by eventually transforming these channel condition values into a respective spatial distribution of estimated radio coverage and uncertainty. A wireless channel condition value may be determined by a signal strength or RSSI (Received Signal Strength Indication), a latency, a throughput measurement, or a channel impulse response. The present embodiments introduce a calculation of an uncertainty indicator. This indicator is beneficial for improving the accuracy of the positioning and for reporting a confidence level of predicted locations. Using this uncertainty indicator advantageously removes the need for including explicit information about the scenery bounds, since these are automatically considered by high uncertainty values on and beyond the borders of the scenery.

## Description

### TECHNICAL FIELD

The present disclosure relates to mobile device tracking or navigation, in particular, tracking or navigation using fingerprint-based indoor localization based on machine learning. The present disclosure further relates to an indoor fingerprint-based enhancement of a localization accuracy that can be used in the configuration of neural networks for indoor fingerprint-based localization.

### BACKGROUND

Radio fingerprint-based indoor localization is an emerging application domain for the navigation and tracking of assets or human personnel. Ubiquitously-available Wi-Fi signals have facilitated low-cost fingerprinting-based localization applications. Further, the rapid growth in mobile hardware capability allows high-accuracy machine learning-based frameworks to be executed locally on mobile devices in an energy-efficient manner. The development of future automation systems and manufacturing process equipment has put considerable focus on an emergence of next-generation or Industry 4.0 appliances and next-generation mobile networks, wherein equipment of all kinds is expected to operate autonomously within interconnected environments. There is, however, a need in the art for enhancing the localization accuracy of presently known indoor localization methods.

### SUMMARY AND DESCRIPTION

The present embodiments relate to a computer-implemented method for generating a for localization of a mobile object in a wireless in-door transmission system including a plurality of transceivers. Some or each transceiver of said plurality of transceivers may be located at a known or fixed location within an indoor area. The method includes the steps of:
- accumulating a timely ordered series of fingerprint datasets of wireless channel condition values acquired by the plurality of transceivers;
- obtaining a fingerprint dataset of at least one wireless channel condition value acquired by the mobile object;
- generating, for each of the plurality of transceivers, a combined reference fingerprint dataset amongst the timely ordered series assigned to a respective one of the plurality of transceivers;
- feeding at least one reference fingerprint dataset into at least two distinct machine learning models in order to produce at least two spatial distribution maps of estimated wireless channel condition values assigned to spatial coordinates amongst the indoor area;
- algorithmically merging the spatial distribution maps of estimated wireless channel condition values to generate at least one spatial distribution map of refined wireless channel condition values;
- generating a spatial distribution map of uncertainty by determining a spatial distribution of measures of dispersion amongst the at least one spatial distribution maps of estimated wireless channel condition values;
- generating a spatial distribution map of estimated positioning errors by determining a plurality of estimated error values deducted by mapping the fingerprint dataset of said at least one wireless channel condition value acquired by the mobile object to a plurality of spatial coordinates in said at least one spatial distribution map of estimated wireless channel condition values;
- generating a spatial distribution map of cost indicators by algorithmically merging the spatial distribution map of estimated positioning errors with the spatial distribution map of uncertainty; and;
- determining the spatial coordinates having a minimum cost indicator in the spatial distribution map of cost indicators and outputting the spatial coordinates having a minimum cost indicator as the locations of the mobile object.

The present embodiments further relate to a processing unit comprising at least one processor and at least one data storage device having stored thereon computer executable program code, which, when executed by the processor, causes the processor to perform the above method.

### DESCRIPTION OF THE DRAWING

The drawings illustrate generally, by way of example, but not by way of limitation, various embodiments discussed in the present document. In the drawings, reference signs may have been repeated among the figures to indicate corresponding elements.
- FIG. 1: is a block diagram illustrating an exemplary radio environment within a segmented indoor environment;
- FIG. 2: is a block diagram illustrating an exemplary radio environment including a processing unit that may implement the disclosed embodiments according to some examples of the present disclosure;
- FIG. 3: shows three distinct spatial distribution maps in accordance with different method steps of the present disclosure; and
- FIG. 4: is a flowchart of method steps according to an example of the present disclosure.

### DETAILED DESCRIPTION

Various methods and systems for locating mobile objects based on wirelessly transmitted signals are known from the prior art. Some known methods determine a location of a mobile object or a mobile device using a field strength of radio signals exchanged between the mobile object and one or more base stations or fixed transmitters in general.

The embodiments provide a fingerprinting-based localization applications and systems with improved accuracy. The object of improving a spatial accuracy is accomplished by leveraging the use of machine-learning techniques for processing wireless channel condition values by eventually transforming these channel condition values into a respective spatial distribution of estimated radio coverage and uncertainty. A wireless channel condition value may be determined - e.g., measured, determined by attribution, and/or calculated - by a signal strength or RSSI (Received Signal Strength Indication), a latency, a throughput measurement, or a channel impulse response.

First, sparse channel condition values as measured by sensors may be completed by the machine-learning techniques trained to complete the assignment of channel condition values to spatial coordinates. This assignment is hereinafter also referred to as map of spatial coordinates wherein each two-dimensional or three-dimensional spatial coordinate of an in-door environment may refer to at least one value on a map, which is frequently depicted by a color radio map.

Machine-learning techniques according to the embodiments may eventually determine or estimate radio coverage maps and uncertainty maps in accordance with the suggested embodiments, by which the indoor position of a mobile or immobile object, e.g., an industrial machine or an automated guided vehicle navigating along an industrial shopfloor, may be determined.

The terms fingerprint and fingerprint dataset as used herein refer to time-correlated, time-stamped individual measurements of any of, or any combination of, received or determined wireless channel condition values such as wireless communication signal strength and signal connectivity parameters, magnetic field parameters or barometric pressure parameters, and mobile device inertial sensor data at known, particular locations along a route being traversed, and also anticipated for traversal, by a mobile object or device.

In other words, a fingerprint as referred to herein may include a correlation of sensor and signal information associated for a unique location in accordance with a particular time stamp of gathering the set of mobile sensor data by time correlating the mobile device gyroscope data, the mobile device accelerometer data, mobile device magnetometer data and any other applicable mobile device sensor data, for example.

Thus, fingerprint data associated with a particular location or position may provide a fingerprint signature that uniquely correlates to that particular location or position. Resulting fingerprint data sets may be stored in a fingerprint data repository, which may be a database of any kind. The data repository may store respective fingerprint maps of various buildings and indoor areas.

Radio fingerprint-based indoor localization is based on fingerprint matching, or also known as scene analysis. This method is particularly superior over traditional trilateration methods as it does not require knowledge of a location of the transceivers or access points in advance. Instead, several transceivers and their corresponding algorithms may obtain precise location results. Further on, fingerprint-based indoor localization has advantages of being low-cost, high-precision, and low-energy consuming.

Having accumulated a plurality of fingerprints in the fingerprint data repository, a radio map - or more specifically: a spatial distribution map of wireless channel condition values - may be established and used for further analysis and for localization of a mobile object.

Using the radio map, one wireless channel condition value or a series of wireless channel condition values determined by a mobile object along a trajectory may be compared to the wireless channel condition values on the map in order to determine the location of the mobile object by one or more matching wireless channel condition value or by a series of matching wireless channel condition value.

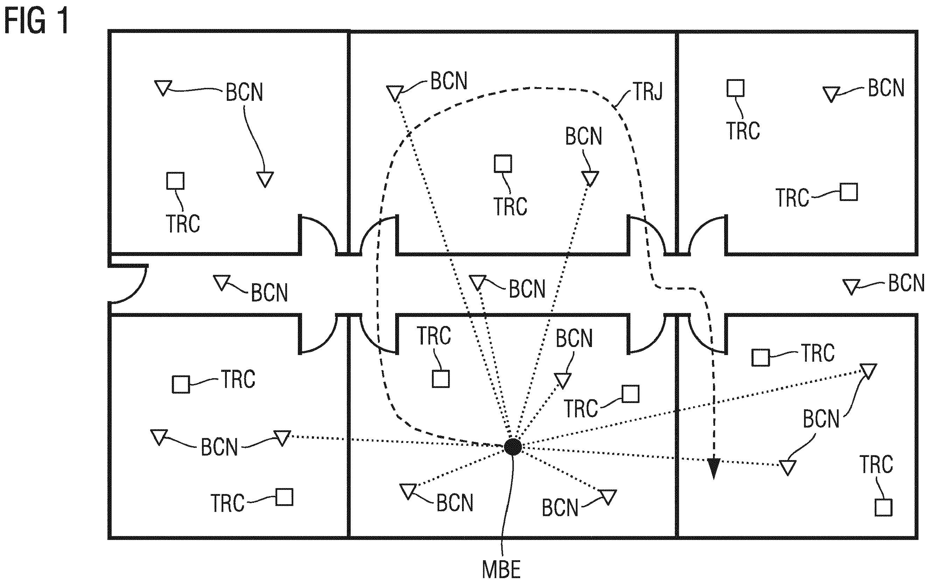

Turning now to FIG. 1 illustrating an exemplary radio environment within a segmented indoor environment or radio environment. The ground plan shows an exemplary environment in which a corridor may connect six halls, which may be separated via respective doors. A multiplicity of access points TRC - in the drawing symbolized by rectangles - and a plurality of beacons BCN - in the drawing symbolized by triangles - may distributed within the indoor environment. As the present embodiments advantageously do not require any stateful or bidirectional communication between access points TRC, beacons BCN and/or the mobile object MBE, both, access points TRC and beacons BCN hereinafter remain being commonly referred to as transceivers.

For the purpose of setting up its own localization according to the embodiments, the mobile object MBE may merely passively receive signals sent by the access points TRC and/or the beacons BCN and record wireless channel condition values such as a signal strength of the received signals. This act of receiving signals from access points TRC and/or the beacons BCN and measuring their respective wireless channel condition values is symbolized by dotted lines pointing towards the mobile object MBE.

The wireless channel condition values may be structured in a fingerprint or fingerprint dataset which may be saved in a repository at the mobile object MBE or in a remote repository. The fingerprints may be retrieved from this repository or, alternatively, directly processed in a processing unit located in the mobile object MBE or, alternatively, in a processing unit located in a remote server or in one of the access points TRC.

A trajectory TJE of a mobile object MBE is illustrated in FIG. 1. The mobile object MBE may record a series of wireless channel condition values determined along this trajectory TJE in order to report or to deposit a series of fingerprint dataset in an ascending timely order.

The transceivers TRC may be provided as wireless base stations or access points, e.g., for wirelessly connecting a mobile device MBE with a wireless network. Alternatively, or additionally, the transceivers TRC may be radio beacons such as Bluetooth, Bluetooth Low Energy (BLE), WiFi, ZigBee, or Ultrawide Band (UWB) beacons. The transceivers TRC may have a fixed and/or known location or position which is known. Transceivers TRC and/or the mobile object MBE may be able to measure wireless channel condition values such as a signal strength of signals which may periodically transmitted other transceivers TRC.

Transceivers TRC and the mobile object may periodically listen to and simultaneously measure wireless channel condition values such as a received signal power from the transceivers. The wireless channel condition values may be arranged in fingerprint data set, e.g., structured as an array, vector or any other data structure for a given receiver, time, and position. Given uncertainties in the radio propagation properties of the environment, some of these measurements may be missing. A missing fingerprint may be caused by received signal strength being below the sensitivity of a receiving transceiver TRC or mobile object MBE.

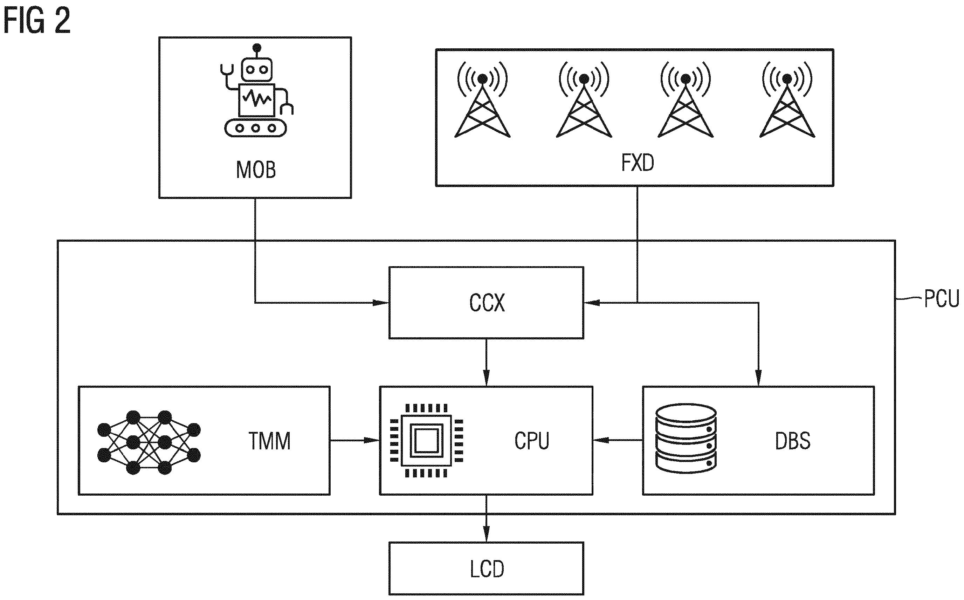

In FIG. 2 a block diagram illustrating an exemplary radio environment as shown. A plurality of fixed transceivers FXD and mobile object MOB are at least indirectly and at least temporarily connected with a processing unit PCU.

The processing unit PCU may implement the disclosed embodiments. An access unit CCX context may access a data repository DBS, one or more fixed transceivers FXD and the mobile object MOB in order to retrieve, accumulate or access data including fingerprint datasets. The access unit CCX may further measure, convert, or accumulate wireless channel condition values such as a received signal power. The access unit may further aid to provide a communication protocol for confiscating with or controlling the fixed transceivers FXD and the mobile object MOB, at least for the purpose of exchanging data of interest. The access unit CCX may further provide a current context of data, e.g., fingerprint datasets which are to be loaded for processing data operations and/or historical data, i.e., data which have been reposited in the past in order to use these data for later analysis.

A processor CPU (»central processing unit«) is a central control instance of the processing unit. It will be apparent to one of ordinary skill in the art that the processor CPU as described herein may be implemented as any type of processing modules containing any types of processing elements including processors and/or coprocessors, graphics processing units or GPUs and multi-core CPUs.

The processor CPU bidirectionally communicates with a memory area DBS, the access unit CCX and an external or internal location data processing unit LCD, which, for example, further processes the location data as determined by and received from the processing PRU.

The processor CPU bidirectionally communicates with a machine learning model TMM, which may be implemented in hardware and/or in software. The machine learning model TMM may be, for example, itself embodied in a processor or any other hardware being dedicated to artificially reproduce a neural network, such as an artificial neural network. If said machine learning model TMM is implemented in software it may be embodied as a computer program product, as a function, as a routine, as an algorithm, as a program code or as an executable object. The machine learning model TMM may include multilayer perceptron units, convolutional neural networks, recurrent neural networks, etc. Those skilled in the art will recognize that a specific definition of the machine learning model TMM will depend on the particular application and algorithm, and all such definitions are contemplated as within the scope of the present disclosure.

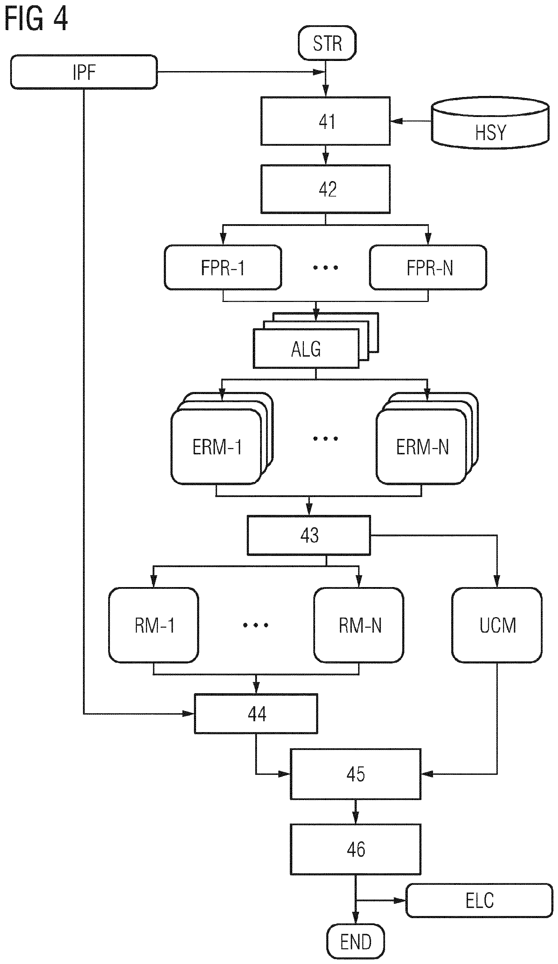

Turning now to FIG. 4 in which a flowchart of method steps according to an example of the present disclosure is shown.

The suggested method may start STR by a step 41 of obtaining a fingerprint IPF of at least one wireless channel condition value acquired by the mobile object. Upon obtaining or receiving a fingerprint IPF from the mobile object or mobile equipment, whose location is to be calculated, the processing unit may enter a step 41 of obtaining a number of historic fingerprints from one or more receivers or from a fingerprint repository HSY. To this end, the fingerprint repository HSY has previously or concurrently accumulated a timely ordered series of fingerprint datasets of wireless channel condition values acquired by the plurality of transceivers which may be transmitted to the processing unit while executing step 41. This step 41 may be performed in order to track the time variance in radio propagation properties of the radio environment. In an industrial environment, for example, a movement of a machine in a factory may create significant changes to the propagation environment, while measurements within an office building will be highly impacted by how many people are present. An appropriate length of the time window for the retrieval of data may depend on these propagation properties or on wireless channel condition values in general and may be estimated accordingly.

In a subsequent step 42 of generating, for each of the plurality of transceivers - the number of transceivers counted by a natural number N - a combined reference fingerprint dataset FPR-1...FPR-N amongst the timely ordered series assigned to a respective one of the plurality of transceivers, the historical fingerprints from the transceivers may be combined in order to produce a combined reference fingerprint dataset FPR-1...FPR-N from which, by a subsequent step, the one or more spatial distribution maps ERM-1...ERM-N of estimated wireless channel condition values will be estimated. This combination may be a weighted average, maximum selection, exponential smoothing, etc. After combining the reference fingerprint dataset FPR-1...FPR-N, the result is a set of N reference fingerprints, where N is the number of transceivers.

In a subsequent step, at least one combined reference fingerprint dataset FPR-1...FPR-N is fed into at least two distinct machine learning models ALG in order to produce at least two spatial distribution maps ERM-1...ERM-N of estimated wireless channel condition values assigned to spatial coordinates amongst the indoor area. The reference fingerprint dataset FPR-1...FPR-N may be fed into at least two distinct machine learning models ALG, e.g., a collection of AI algorithms that have been trained to produce a complete »radio map« of the scenario - or more specifically: spatial distribution maps ERM-1...ERM-N of estimated wireless channel condition values - out of sparse samples from the fixed receivers. Examples of such AI algorithms may include multilayer perceptrons, convolutional neural networks, recurrent neural networks, etc. An important motivation of this embodiment is that the processing unit advantageously does not necessarily have to rely on a single »radio map« -estimating algorithm, but on a collection of them. These algorithms ALG may be different in terms of their model structure but exhibit similar prediction accuracies. In a possible embodiment, multiple prediction algorithms may be employed such as an ensemble of the aforementioned neural networks trained with varying hyperparameters. In a possible other embodiment, the same algorithms ALG may be used, however trained with different spatial or temporal chunks of data. Each AI algorithm ALG may return a prediction of a wireless channel condition value for each coordinate in said spatial distribution maps ERM-1...ERM-N of estimated wireless channel condition values, preferably for each of the N transceivers.

In a subsequent step 43, the spatial distribution maps ERM-1...ERM-N of estimated wireless channel condition values are then concurrently or consequently processed in two manners:
- The spatial distribution maps ERM-1...ERM-N of estimated wireless channel condition values are algorithmically merged to generate at least one spatial distribution map RM-1...RM-N of refined wireless channel condition values. This may mean that the data of the spatial distribution maps ERM-1...ERM-N of estimated wireless channel condition values is ensembled with the intention of providing a better estimation of the wireless channel condition values than any individual algorithm. This can be done, for example, by taking the mean of all predictions.
- a spatial distribution map UCM of uncertainty is generated by determining a spatial distribution of dispersion values, such as variance, amongst the at least one spatial distribution maps of estimated wireless channel condition values. This may mean that the measure of dispersion - e.g., the variance - among predictions is converted into an uncertainty measurement, for instance, by comparing it with the measure of dispersion of uniformly distributed guesses. This uncertainty reflects the quality of the prediction and increases in those areas for which there are little training data. This helps preventing the algorithm from predicting a location outside the bounds of the scenario, as well as countering the effects of noise in the RSSI measurements.

In a subsequent step 44 of generating a spatial distribution map of estimated positioning errors by determining a plurality of estimated error values deducted by mapping the fingerprint dataset IPF of said at least one wireless channel condition value acquired by the mobile object to a plurality of spatial coordinates in said at least one spatial distribution map ERM-1...ERM-N of estimated wireless channel condition values, an estimated positioning error may be calculated for all points in space out of the input fingerprint IPF and the set of n estimated radio maps ERM-1...ERM-N. This step may be implemented as the mean square error between the input fingerprint IPF and the predicted fingerprint at any given point or coordinate in the respective coordinate system of the estimated radio maps ERM-1...ERM-N.

In a subsequent step 45 of generating a spatial distribution map of indicators or cost indicators by algorithmically merging or combining the spatial distribution map of estimated positioning errors with the spatial distribution map UCM of uncertainty, the positioning error and the uncertainty of a given point or spatial coordinate may be combined into a single indicator or cost indicator. The result of such combined square error and uncertainty may be designated as a »cost indicator«. This cost indicator may be determined by a combined square error and uncertainty, for example by applying one or more mathematical operations including a weighted average or a product of normalized probabilities. Although the designation »cost indicator« originally had business origins, it has been gained prevalence in technical domains where a parameter is to be minimized, particularly in the field of optimization of machine learning parameters. It is well known to those skilled in the art that a cost indicator refers to a technical indicator to be minimized rather actual costs in a monetary sense.

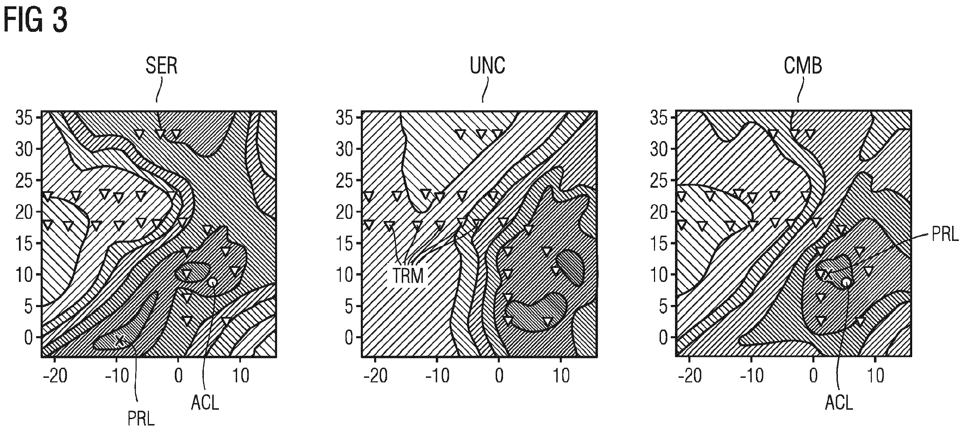

A pictorial representation of an exemplary distribution map CMB of cost indicators is shown in Figure 3. The cost indicator may reflect how likely it is that any given point or coordinate as depicted in the map is conforming with the actual location of the mobile equipment which reported the input fingerprint IPF.

In a subsequent step 46 of determining the spatial coordinates having a minimum cost indicator in the spatial distribution map of cost indicators, the location of the mobile object is determined. Using global or local optimization techniques, such as stochastic gradient descent, Nelder-Mead algorithm, differential evolution, etc., the point with the lowest cost indicator may be found and reported as the estimated location ECL, which is the most likely position of the mobile object. Optionally, the value of the cost indicator in other points can be also reported to inform about the level of confidence in the prediction. After the estimated location ELC and/or said other values have been reported, the suggested method has been come to an end END.

FIG. 3 shows a spatial distribution map SER of estimated positioning errors, a spatial distribution map UNC of uncertainty and a spatial distribution map CMB of a combined square error and uncertainty, which may also referred to as a spatial distribution map CMB of a cost indicator.

All spatial distribution maps SER, UNC, CMB show a two-dimensional coordinate system with a division in meters wherein the value assigned to a respective coordinate in the map is represented by a correspondingly denser or looser hatching in the vicinity of said coordinate. Alternatively - not shown - colors may be used in order to depict the value assigned to a respective coordinate. Such colored coverage maps are often referred to as »radio maps« or »heat maps«.

As a further commonality of all maps depicted in FIG. 3, transceivers TRM - e.g., wireless access points, wireless base stations, beacons etc. - are shown and symbolized by triangles. The position of all transceivers is identical in all maps depicted in FIG. 3. The spatial distribution maps SER, CMB exhibit the actual location ACL - symbolized by a circle - and the predicted location PRL symbolized by a square. The - usually unknown - actual location ACL is to be determined by approximation or predication. One can see that the cost indicator map CMB - or spatial distribution map CMB of a combined square error and uncertainty - may provide a more accurate position of the predicted location PRL than the estimated positioning errors map SER, since the predicted location PRL in the latter map CMB is closer to the ACL than in the first map SER.

The present embodiments are not restricted to a particular wireless transmission protocol. The embodiments enable a usage of inexpensive transmission protocols such as Bluetooth, WiFi, or ZigBee for indoor positioning, in contrast more expensive technologies such as UWB, while still being able to accurately determine a location of the mobile object.

Instead of relying on trilateration or range estimation, which may lead to a rather poor performance when - as may be the case in industrial or office deployments - non-line of sight conditions are prevalent, the present embodiments are based on a radio map estimation and optimal fitting of the observed fingerprint data sets, which results in a better localization accuracy even for intricate sceneries, in particular within industrial environments.

The present embodiments introduce a calculation of an uncertainty indicator. This indicator is not only beneficial for improving the accuracy of the positioning but also for reporting a confidence level of predicted locations. Using this uncertainty indicator advantageously removes the need for including explicit information about the scenery bounds, since these are automatically considered by high uncertainty values on and beyond the borders of the scenery.

The algorithms used in the present embodiments are not demanding sophisticated computing resources and may, therefore, also be used in real time localization. In addition, the AI algorithms may be pre-trained for additionally saving computing resources. Existing efficient global optimization approaches may be used for quickly finding an optimal position.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer-implemented method for localization of a mobile object in a wireless indoor transmission system including a plurality of transceivers, each transceiver of said plurality of transceivers being located at a known location within an indoor area, the method comprising the steps of:
- accumulating a timely ordered series of fingerprint datasets of wireless channel condition values acquired by the plurality of transceivers;
- obtaining a fingerprint dataset of at least one wireless channel condition value acquired by the mobile object;
- generating, for each of the plurality of transceivers, a combined reference fingerprint dataset amongst the timely ordered series assigned to a respective one of the plurality of transceivers;
- feeding at least one reference fingerprint dataset into at least two distinct machine learning models in order to produce at least two spatial distribution maps of estimated wireless channel condition values assigned to spatial coordinates amongst the indoor area;
- algorithmically merging the spatial distribution maps of estimated wireless channel condition values to generate at least one spatial distribution map of refined wireless channel condition values;
- generating a spatial distribution map of uncertainty by determining a spatial distribution of measures of dispersion amongst the at least one spatial distribution maps of estimated wireless channel condition values;
- generating a spatial distribution map of estimated positioning errors by determining a plurality of estimated error values deducted by mapping the fingerprint dataset of said at least one wireless channel condition value acquired by the mobile object to a plurality of spatial coordinates in said at least one spatial distribution map of estimated wireless channel condition values;
- generating a spatial distribution map of cost indicators by algorithmically merging the spatial distribution map of estimated positioning errors with the spatial distribution map of uncertainty; and;
- determining the spatial coordinates having a minimum cost indicator in the spatial distribution map of cost indicators and outputting the spatial coordinates having a minimum cost indicator as the locations of the mobile object.

2. The method according to the aforementioned claim, wherein the wireless channel condition value is a value at least indirectly determined by at least one measurement including an RSSI measurement, a latency measurement, a throughput measurement, or a channel impulse response measurement.

3. The method according to one of the aforementioned claims, the machine learning model including a hardware embodiment and/or a software embodiment of a neural network, a convolutional neural network, a multilayer and/or a recurrent neural network.

4. The method according to one of the aforementioned claims, wherein determining the spatial coordinates having a minimum cost indicator in the spatial distribution map of cost indicators includes an optimization using local or global optimization techniques.

5. The method according claim 4, wherein the optimization using said local or global optimization techniques includes using a stochastic gradient descent, a Nelder-Mead algorithm, and/or a differential evolution.

6. The method according to one of the aforementioned claims, wherein outputting the spatial coordinates having a minimum cost indicator further includes outputting at least one other cost indicator along with its spatial coordinates.

7. The method according to one of the aforementioned claims, wherein said measures of dispersions are variance values.

8. A processing unit for localization of a mobile object in a wireless indoor transmission system including a plurality of transceivers, each transceiver of said plurality of transceivers being located at a known location within an indoor area, the processing unit including:
- an access unit for obtaining a timely ordered series of fingerprint datasets of wireless channel condition values acquired by the plurality of transceivers and for obtaining a fingerprint dataset of at least one wireless channel condition value acquired by the mobile object;
- a processor for
- generating, for each of the plurality of transceivers, a combined reference fingerprint dataset amongst the timely ordered series assigned to a respective one of the plurality of transceivers;
- feeding at least one reference fingerprint dataset into at least two distinct machine learning models in order to produce at least two spatial distribution maps of estimated wireless channel condition values assigned to spatial coordinates amongst the indoor area;
- algorithmically merging the spatial distribution maps of estimated wireless channel condition values to generate at least one spatial distribution map of refined wireless channel condition values;
- generating a spatial distribution map of uncertainty by determining a spatial distribution of measures of dispersion amongst the at least one spatial distribution maps of estimated wireless channel condition values;
- generating a spatial distribution map of estimated positioning errors by determining a plurality of estimated error values deducted by mapping the fingerprint dataset of said at least one wireless channel condition value acquired by the mobile object to a plurality of spatial coordinates in said at least one spatial distribution map of estimated wireless channel condition values;
- generating a spatial distribution map of cost indicators by algorithmically merging the spatial distribution map of estimated positioning errors with the spatial distribution map of uncertainty; and;
- determining the spatial coordinates having a minimum cost indicator in the spatial distribution map of cost indicators and outputting the spatial coordinates having a minimum cost indicator as the locations of the mobile object.

9. A mobile object including a processing unit according to claim 8.

10. An industrial vehicle including a processing unit according to claim 9.
